# EUROPEAN PATENT SPECIFICATION

(11) **EP 3 479 357 B1**
(45) Date of publication and mention of the grant of the patent: **01.02.2023**
(21) Application number: 17821352.6
(22) Date of filing: 30.06.2017
(51) Int. Cl.: B29C 64/35, B29C 71/00, B33Y 40/20, B24B 31/06

(54) **SURFACE EQUALIZATION APPARATUS AND METHOD**
OBERFLÄCHENAUSGLEICHSVORRICHTUNG UND -VERFAHREN
APPAREIL ET MÉTHODE D'ÉGALISATION DE SURFACE

(30) Priority: 30.06.2016 US 201662356751 P
(43) Date of publication of application: 08.05.2019
(73) Proprietor: Postprocess Technologies Inc., Buffalo, NY 14214 (US)
(72) Inventor: HUTCHINSON, Daniel, Joshua, Lancaster, NY 14086 (US)
(74) Representative: Freischem & Partner Patentanwälte mbB
(86) International application number: PCT/US2017/040275
(87) International publication number: WO 2018/005960

(56) References cited:
- CH-A- 405 098
- US-A- 2 973 606
- US-A- 4 143 491
- US-A- 5 143 663
- US-A1- 2005 173 838
- US-A1- 2005 173 838
- US-A1- 2009 321 972
- US-A1- 2009 321 972
- US-B1- 6 270 398
- MASSFIN: 'Vibratory Finishing of the automotive - high tolerance parts in Walther Trowal cell', [Online] 02 May 2015, XP054978104 Retrieved from the Internet: <URL:https://www.youtube.com/watch?v=67twsG z4CtA> [retrieved on 2017-09-07]

## Description

### CROSS-REFERENCE TO RELATED APPLICATIONS

This application claims the benefit of a provisional application No. 62-365,751 filed on June 30, 2016.

### TECHNICAL FIELD

The present disclosure pertains to a method of surface equalization of a part formed by 3D printing according to claim 1 and to an apparatus according to claim 8 for surface finishing a part formed by 3D printing and enhancing mechanical properties of the part.

### BACKGROUND

3D printing often results in a printed part having an uneven surface. For example, fused deposition modeling (FDM) is a 3D printing technology commonly used for modeling, prototyping, and production applications. FDM works on an "additive" principle by laying down material in layers; a plastic filament or metal wire is unwound from a coil and supplies material to produce a part. This process may result in a "layered" surface, where individual steps associated with each layer progress in an overall direction. Such a surface may not be suitable for some application areas where a more sophisticated finish is desired. Additive manufacturing and 3D printing methods are not limited to those disclosed herein.

Due to the layered appearance and/or porosity of the body of a part produced by 3D printing, it may be desirable to equalize the surface of the part both internally and externally to give it a more finished appearance and improve function. Although the field is relatively new, methods of producing a finished appearance in a 3D printed part are known in the art. These include the use of adhesive film that is applied to the surface of the 3D printed part that bonds to the part and gives the appearance of an enhanced surface. Other methods include the use of solvents that erode the surface of the part to provide a smooth finish

The drawbacks of the known systems are numerous, including limitations caused by incompatibility with a variety of materials and shapes. In existing systems, much experimentation may be required to discover the appropriate abrasive, adhesive, and/or solvent for each part.

Effective and efficient surface finishing for a wide variety of 3D printed materials and part shapes and sizes requires a system that is universally applicable. Therefore, a need exists for a surface equalization apparatus that can accommodate the wide and expanding variety of part types encountered in the fast-growing field of 3D printing and additive manufacturing. We refer to US 4,143,491 A, US 2,973, 606A, CH 405 098 A and US 2009/321972 A1 as prior art. Document US 4 143 491 A discloses a method according to the preamble of claim 1 and an apparatus according to the preamble of claim 8 for surface equalization of a part formed by 3D printing.

### SUMMARY

In the present disclosure, a solution to the problems of existing surface finishing methods and devices is provided through a surface equalization apparatus designed to be compatible with a wide variety of technologies, including FDM, PolyJet, DMLS, CBAM and the like, along with various composite materials and part geometries. The present disclosure describes a surface equalization apparatus that has a novel design and works together with software, abrasive and polishing materials and detergent for a synergistic effect on improving efficiency and effectiveness in surface finishing.

The surface equalization apparatus of the present disclosure includes an oblong input tank for holding media and a 3D printed part. The outer portion of the input tank is connected to a motor mount, which, in turn, is connected to an eccentric motor. When the motor is activated, the input tank begins to move in a vibrational manner, in a z direction. The input tank is attached to springs, generally adjacent the top, outer portion of the tank and the motion of the tank on the springs creates a rotational flow of media in the input tank. This rotational flow of media creates a consistent and calibrated low amplitude/high frequency movement of the part through the tank.

The rotational flow of the media works in conjunction with structures on the inside of the input tank, which include diverters and guide ribs. These structures help prevent the part from contacting the side of the tank and causing damage to the part. Media is replenished in the input tank through a set of spray nozzles positioned at intervals above the media in the input tank, and connected to a washer tank which supplies fresh media. Acoustic damping foam is positioned around the central components of the surface equalization apparatus. A cooling fan is integral with a side of a cabinet to allow air flow through the apparatus.

### BRIEF DESCRIPTION OF THE DRAWINGS

Preferred embodiments of the present invention will now be described, by way of example only, with reference to the attached Figures, wherein:
FIG.1 shows a top perspective view of the surface equalization apparatus in accordance with the present disclosure.
FIG.2 shows a top perspective view of the surface equalization apparatus in accordance with the present disclosure.
FIG.3 shows a top perspective view of the surface equalization apparatus in accordance with the present disclosure.
FIG.4 shows a cross-sectional side view of the surface equalization apparatus in accordance with the present disclosure.
FIG.5 shows a cross-sectional side view of the surface equalization apparatus including a visualization of the direction of media in accordance with the present disclosure.
FIG.6 shows a top view of the surface equalization apparatus in accordance with the present disclosure.
FIG.7 shows a cross-sectional side view of the surface equalization apparatus in accordance with the present disclosure.

### DETAILED DESCRIPTION

In the following description, the various embodiments of the present invention will be described in detail. However, such details are included to facilitate understanding of the invention and to describe exemplary embodiments for implementing the invention. Such details should not be used to limit the invention to the particular embodiments described because other variations and embodiments are possible while staying within the scope of the invention.

Furthermore, although numerous details are set forth in order to provide a thorough understanding of the present invention, it will be apparent to one skilled in the art that these specific details are not required in order to practice the present invention. In other instances details such as, well-known methods, types of data, protocols, procedures, components, networking equipment, processes, interfaces, electrical structures, circuits, etc. are not described in detail, or are shown in block diagram form, in order not to obscure the present invention.

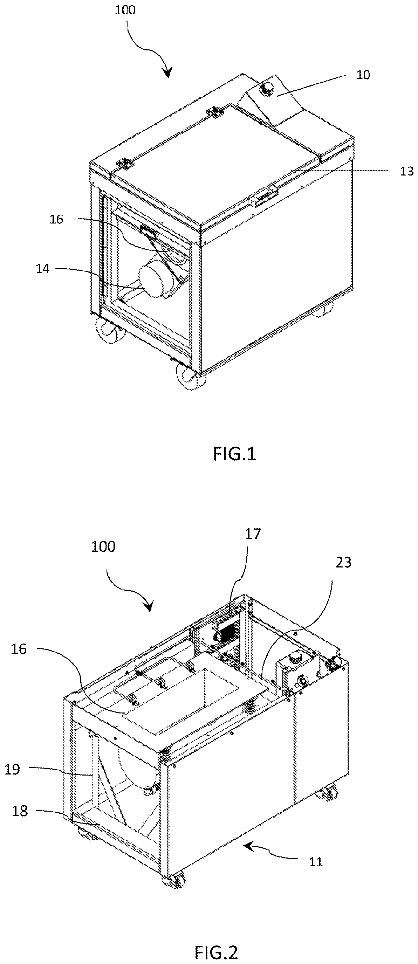

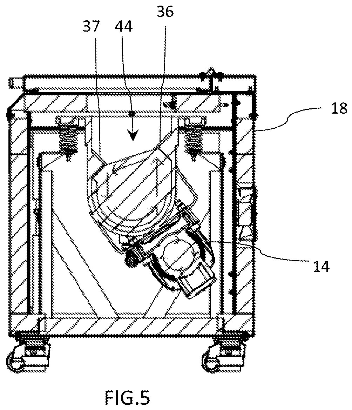

Referring now to FIG.1, an embodiment of a surface equalization apparatus 100 in accordance with the present invention is shown. Surface equalization apparatus 100 may be used for finishing relatively large 3D parts. Lid 13 opens to allow placement of a 3D printed part in a media 44 (shown in FIG.5) held in input tank 16. Input tank 16 may be preferably comprised of urethane. Control panel 10 allows a user to input initial pre-determined parameters such as time and motor speed. Eccentric motor 14 is shown below input tank 16. Eccentric motor 14 is attached to input tank 16 such that when eccentric motor 14 is powered on, it causes input tank 16 to vibrate in a manner that results in surface equalization, or surface finishing. In some embodiments two eccentric motors 14 may be used side by side and/or on opposite sides on input tank 16.

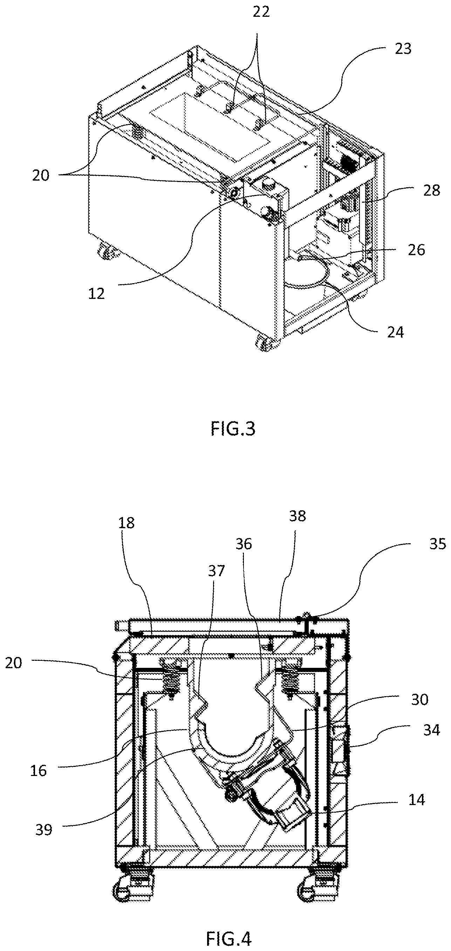

Referring now to FIG. 2, finisher chassis 19 surrounds input tank 16 and provides structural support for surface equalization apparatus 100. Acoustic damping foam 18 is shown adjacent finisher chassis 19. Electronics panel 28 (shown in FIG.3) controls operations for surface equalization apparatus 100.

Referring now to FIG.3, wastewater removal bucket 24 provides a means for separation of liquid from solid waste after wastewater leaves wastewater outlet 26. Washer tank 12 contains media 44 for dispensing into input tank 16 through spray nozzles 22, which are connected to washer tank 12 through spray nozzle piping 23.

Spray nozzle 22 flow range is important for the present disclosure, such that in order to maximize the lubricity of the media these nozzles are evenly spaced to mist or spray into the chamber to create a homogeneous mixture. In a preferred embodiment, three spray nozzles 22 are spaced evenly at a top edge of input tank 16. The position of the nozzles is fixed to point directly at the media 44 in input tank 16. The flow rate of media 44 exiting spray nozzles 22 may be determined by onboard computer. Washer tank 12 is shown adjacent to input tank 16 to feed the spray valves.

Referring now to FIGs. 4 and 5, cross-sectional side views of the present disclosure shows eccentric motor 14 offset from a vertical axis running through the center of input tank 16. As shown in FIG.5, eccentric motor 14 rotates to cause vibrational motion of the U-shaped, oblong input tank 16. Motor mount 30 allows the vibrational energy generated by eccentric motor 14 to be transferred to input tank 16 and media 44. Eccentric motor 14 rotates in the opposite direction of the rotational flow of media 44. Eccentric motor 14 has an applied angle to allow for the feed and discharge rate of the part in continuous motion. The angle of the eccentric motor 14 may be offset to 30° relative to a vertical axis in the preferred embodiment, although the angle may vary based on parameters of the part and surface equalization apparatus 100. Media 44 is at an angle during operation of the apparatus (see Table 1 for relationships between media and other aspects of surface equalization machine 100). When a part reaches a complete cycle it goes through a slope phase, traveling from peak amplitude at a discharge, or exhaust, portion down to an intake portion. The machine is designed and calibrated to maintain the part below the surface of media 44 at all times.

As shown in FIG.4, a key functional feature of the present disclosure is use of an eccentric motor 14 that causes springs 20 attached to the input tank 16 to move in a z-direction motion (or a bounce). Input tank 16 is suspended on springs 20, which control a force applied by eccentric motor 14, resulting in a z-direction, or vertical, motion on the order of 1-3 millimeters, in a preferred embodiment.

Eccentric motor 14 is positioned tangential to input tank 16 on motor mount 30. Eccentric motor 14 spins, causing a frequency of motion that is harnessed to an up and down motion in the springs 20 attached to input tank 16. The tension of the springs 20 generates a lifting motion.

Placing springs 20 at the top portion of input tank 16 creates a more stable system than having the springs 20 below input tank 16, although it is possible that an effective system could be designed with the springs 20 below input tank 16. Alignment of springs 20 to a metacentric height and the center of gravity, with respect to input tank 16, is an important aspect of the present disclosure, and creates stable dynamic motion. A metacenter is defined as the point of intersection between a vertical line through the center of buoyancy of a floating body such as a ship and a vertical line through the new center of buoyancy when the body is tilted, which must be above the center of gravity to ensure stability. The metacentric height (GM) is a measurement of the initial static stability of a floating body. It is calculated as the distance between the center of gravity of a ship and its metacenter. A larger metacentric height implies greater initial stability against overturning. The motion center of the fluid mass abrading the surface the part in motion.

Eccentric motor 14 is calibrated to the combined mass of input tank 16, eccentric motor 14, and the media 44 contained in input tank 16. The power ratio may be as follows: for every pound of mass (input tank 16, media 44 contained in input tank 16, and eccentric motor 14 combined), approximately 24.78 N (5.57 pounds of force) is applied by eccentric motor 14. For example, the range of force to weight may be approximately 4:1 to 7:1. The surface equalization apparatus 100, in one embodiment used for larger 3D parts, may, for example, apply 7380 N (1659 lbf)to a weight of 135kg (298 lbs).

As shown in FIG.5, media 44 flows rotationally, here illustrated in a counterclockwise direction, in response to activation of eccentric motor 14, which rotates in the opposite direction of the rotational flow of media 44; here clockwise. While media 44 rotates, it carries a part to in a cycle through input tank 16. Media 44 has a sloped, generally flat, surface during operation of surface equalization apparatus 100. The effect on the part is delicate in nature with surface equalization apparatus 100 when compared to conventional surface finishing devices due to the low amplitude/high frequency ratio motion of the part. The part moves in a symmetrical, submerged, circuitous motion. The motion of the springs 20 causes the input tank 16 to move generally in a z-direction. This motion causes the part to be agitated within the media 44 containing abrasives and detergent, thereby generating heat energy and allowing complete immersion of the part such that all surfaces of the part receive consistent and simultaneous abrasion in a manner that effectively causes surface equalization.

Further, media 44 is formulated to avoid damage to delicate parts and keep the part below the surface of media 44 and away from solid portions of input tank 16. The surface equalization apparatus 100, in a preferred embodiment, may be effective for low density media/low density part surface equalization. Input tank 16 holds media 44 designed specifically for use in surface finishing.

FIGs A and 5 show abrasive diverters, which include an exhaust diverter 36 and an intake diverter 37, which modify the shape of the input tank 16. Abrasive diverters are attached to the wall, or incorporated into the wall, of input tank 16 to modify the shape of the input tank 16 and may be preferably comprised of urethane. Abrasive diverters create directional energy transference, as exhaust diverter 36 and intake diverter 37 are energy dissipaters. In a preferred embodiment, exhaust diverter 36 and intake diverter 37 are positioned on opposing walls of input tank 16, at the surface of media 44. In some embodiments, only one abrasive diverter may be used. It is conceivable that no abrasive diverters would be necessary for certain applications.

As shown in FIG.5, abrasive diverters are angled to properly direct the flow of media 44 in the input tank 16. The abrasive diverters may be triangular in shape, and jut inward to direct media 44 flow so as to prevent the part from reaching the surface. The abrasive diverter is turning the part at the crest so that when the part is on the intake side there is fluid movement around the part. The abrasive diverter prevents the part from riding down the bed of media 44 on the surface, and maintains the part in a desirable position underneath the media 44 surface.

Optimal cubic foot of media 44 determines where the intake diverter 37 would be. The crest of each abrasive diverter may be, in a preferred embodiment, 2.54 cm (an inch) above the slope of the surface of media 44, or may also be approximately at the surface of media 44.

FIG.4 shows guide ribs 39, which generally extend from one side of input tank 16 to the other. Guide ribs 39 may be semi cylindrical in shape and be spaced evenly longitudinally across input tank 16 and preferably be comprised of urethane. In a preferred embodiment there may be five guide ribs 39 in input tank 16, and spaced evenly at a rate of seven guide ribs 39 per square cubic foot. Guide ribs 39 may preferably be 0.635 cm (¼") to 12.7 cm (5") in width and 0.635 cm (¼") to 7.62 cm (3") in depth. Guide ribs 39 create an inward force toward the center of input tank 16 on media 44 when eccentric motor 14 is powered on, thereby preventing the part from contacting the surface of input tank 16, thereby preventing damage to the part.

The media 44 is selected to prevent contact with the wall of input tank 16. Surface equalization apparatus 100 has a desired ratio of 0.028 m³(cubic foot) of media 44 and open space to allow for the desired intake and discharge rates, while controlling the lubricity rates.

Media 44 may preferably have a density ranging from 320 kg/m³ (20 lbs/ft³ ) to 1442 kg/m³ (90 lbs/ft³ ), which is significantly lower than typical surface finishing media, thereby allowing a part to move inside the mass of media 44 as if the part were in a fluid; keeping media 44 between the part and the wall of input tank 16. The media 44 may be described as a fluidized bed, such that conditions allow a solid to act like a fluid; those conditions creating the fluidized bed.

While surface equalization apparatus 100 is in operation, the breakdown, or attrition rate, of the media 44 is lower when compared to conventional surface finishing machines. The slowing of the attrition rate of media 44 in surface equalization apparatus 100 can, in part, be attributed to media 44 being applied over a period of time.

Addition of media 44 during operation has cleaning and cooling properties along with providing lubricity to media 44 in the input tank 16. This addition of media 44 reduces unnecessary friction that would otherwise wear media 44 at an accelerated rate. Composite materials may be more susceptible to moisture absorption (parts are hygroscopic). The washer tank 12 may automatically add media 44 at a rate based on testing of the part.

The amplitude of the input tank 16, or more specifically a ratio of lower amplitude and higher frequency, allows for reduced attrition of the media 44. The shape of the input tank 16 is important for function. Further, the capability of tuning eccentric motor 14 from 900 to 4500 rpm allows for motion caused by eccentric motor 14 and the optimized frequency of the desired tunable ratio example of (k factor) for the requested amplitude (from .5mm to 4mm) from the springs 20 resulting in amplitude movement in input tank 16. The z-direction motion of the media 44 mass is much lower in amplitude than it would be with lower operating frequency of the drive. Surface equalization machine 100 may operate based on DC or AC current, or equivalents thereof.

The U-shaped, curved, oblong walls of the input tank 16 are essential in generating the proper motion of the media 44 in order to create a conveyor belt type of rotational flow for surface equalization, as illustrated in FIG. 5. The center of mass under fluid motion is a key factor in determining the pattern of inlet and discharge rate.

An important feature of the present disclosure is an acoustic cabinet 11 (shown in FIG.2) surrounding input tank 16 that acoustically dampens at a spectrum of frequencies. Cabinet 11 is built in a way that allows room for the proper thickness of acoustic damping foam 18 (shown in FIGs A and 5). Acoustic damping foam 18 is necessary to optimize acoustic dampening of the noise caused by input tank 16 and media 44 motion. Acoustic damping foam 18 is placed throughout the eccentric motor14/input tank 16 cabinet. Input tank 16 is completely surrounded by acoustic damping foam 18 except for the top, open portion of the input tank 16, which is covered only by lid 13.

The ranges of frequencies of sound which are dampened are generally below 73 dBa. Input tank 16, media 44 and eccentric motor 14 cause a frequency spectrum of sound, so during the development of the present invention, an engineering study was performed to find the proper way to dampen the appropriate frequencies. The intended amplitude, in a preferred embodiment, is from 1mm to 3mm and frequencies from 1200 rpm to 3600 rpm in order to have a desired feed and discharge rate from 4 to 180 seconds with regard to the density volume to noise ratio.

The sound generated by operation of the device creates dissipated energy at an absorption rate, so the surface equalization apparatus 100 also has a cooling fan 34 because eccentric motor 14 generates heat, and prior vibrational based finishing devices have been known to fail due to excessive heat caused by a motor. The present disclosure uses cooling fan 34 to solve this problem, along with acoustic dampening to create sufficient dissipation of heat in order to prevent the eccentric motor 14 from failing.

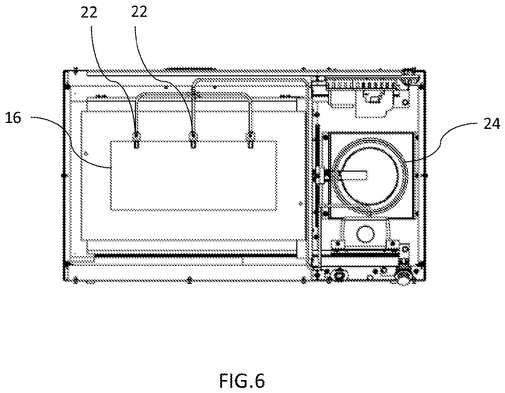

FIG.6 shows a top view of surface equalization apparatus 100, illustrating the spatial relationship of the spray nozzles 22 to input tank 16.

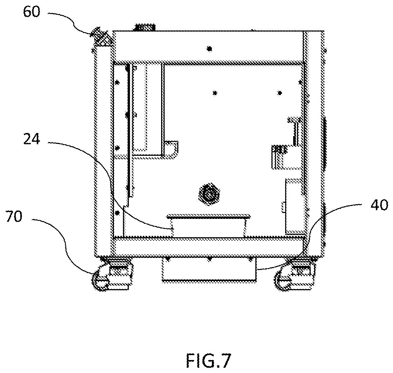

FIG.7 shows a power button 60 along with wastewater removal bucket 24 and drain well 40. Further illustrated are caster wheels 70, which may be coated in urethane for noise reduction.

In some embodiments of the present disclosure there may be two recovery tanks below input tank 16. Recovery tanks collect drainage from input tank 16 and may use a weir system to separate solids from liquids. These recovery tanks have the ability to either recirculate or run on an open loop process. A hinge 35 having positive and negative resistance to hold the lid 13 in place is illustrated in FIG.4.

In some embodiments of the present disclosure, a Beckhoff PLC/HMI provides the ability to run on an auto cycle. This system provides automatic run times, dosing, and flow control. Further, this system provides data monitoring of eccentric motor 14 frequencies, input tank 16 frequencies and amplitude, and enclosure temperature.

In some embodiments, separate spray valves allow two zones to be run with different settings at the same time, allowing for the use of different media 44 and different spray volumes and intervals.

**Table 1**

| Media | Motor Force (N) (lbs) | Media Volume (m3) (Gal) | Media Volume (m3) (ft³) | Media Mass (kg) | Media Weight (kg) (lbs) | Cycle Time RPM (sec) | Front Depth (cm) (in) | Back Depth (cm) (in) | Media Slop e | Media Angle (°) | 0,9144 m (3 ft) Sound (dB) | 1,8288 m (6 ft) Sound (dB) |
|---|---|---|---|---|---|---|---|---|---|---|---|---|
| UPM | 7380 (1659) | 0.003 7854 (1) | 0.003 7854 (0.13 3681) | 4.4 | 4.3908 (9.68) | 0 | 0 | 0 | 0 | 0 | 87.1 | 79.5 |
| UPM | 7380 (1659) | 0.007 5708 (2) | 0.007 5708 (0.26 7362) | 8.8 | 8.7815 (19.36) | 5 | 0 | 0 | 0 | 0 | 82.5 | 78.5 |
| UPM | 7380 (1659) | 0.0113 562 (3) | 0.011 3563 (0.40 1043) | 13.2 | 13.1723 (29.04) | 5 | 25.4 (10) | 17.78 (7) | 0.31 578 947 37 | 17.52 55683 7 | 84.1 | 78.1 |
| UPM | 7380 (1659) | 0.015 1416 (4) | 0.015 1417 (0.53 4724) | 17.6 | 17.5631 (38.72) | 4.75 | 25.4 (10) | 15.24 (6) | 0.42 105 263 16 | 22.83 36541 8 | 83.1 | 76.7 |
| UPM | 7380 (1659) | 0.018 927 (5) | 0.018 9271 (0.66 8405) | 22 | 21.9539 (48.4) | 4 | 21.59 (8.5) | 12.7 (5) | 0.36 842 105 26 | 20.22 48594 3 | 81.2 | 76.5 |
| UPM | 7380 (1659) | 0.022 7125 (6) | 0.022 7125 (0.80 2086) | 26.4 | 26.3446 (58.08) | 3.7 | 17.14 5 (6.75) | 10.16 (4) | 0.28 947 368 42 | 16.14 43387 8 | 80.1 | 75 |
| UPM | 7380 (1659) | 0.026 4979 (7) | 0.026 4980 (0.93 5767) | 30.8 | 30.7354 (67.76) | 4 | 13.97 (5.5) | 8.89 (3.5) | 0.21 052 631 58 | 11.88 86580 4 | 80 | 75 |
| UPM | 7380 (1659) | 0.030 2832 (8) | 0.030 2834 (1.06 9448) | 35.2 | 35.1262 (77.44) | 5 | 10.79 5 (4.25) | 7.62 (3) | 0.13 157 894 74 | 7.495 85764 | 78.5 | 75.5 |
| | | | | | | | | | | | | |
| UAM | 7380 (1659) | 0.003 7854 (1) | 0.003 7854 (0.13 3681) | 5.1 | 5.0893 (11.22) | 0 | 0 | 0 | 0 | 0 | 89.9 | 83.5 |
| UAM | 7380 (1659) | 0.007 5708 (2) | 0.007 5708 (0.26 7362) | 10.2 | 10.1786 (22.44) | 4.75 | 0 | 0 | 0 | 0 | 88.5 | 81.2 |
| UAM | 7380 (1659) | 0.0113 562 (3) | 0.011 3563 (0.40 1043) | 15.3 | 15.2679 (33.66) | 4 | 26.67 (10.5) | 17.78 (7) | 0.36 842 105 26 | 20.22 48594 3 | 86.1 | 79.3 |
| UAM | 7380 (1659) | 0.015 1416 (4) | 0.015 1417 (0.53 4724) | 20.4 | 20.3572 (44.88) | 3.5 | 25.4 (10) | 15.24 (6) | 0.42 105 263 16 | 22.83 36541 8 | 84.5 | 78.6 |
| UAM | 7380 (1659) | 0.018 927 (5) | 0.018 9271 (0.66 8405) | 25.5 | 25.4465 (56.1) | 3.25 | 22.86 (9) | 11.43 (4.5) | 0.47 368 421 05 | 25.34 61759 4 | 83.6 | 77.3 |
| UAM | 7380 (1659) | 0.022 7125 (6) | 0.022 7125 (0.80 2086) | 30.6 | 30.5358 (67.32) | 3.2 | 17.78 (7) | 10.16 (4) | 0.31 578 947 37 | 17.52 55683 7 | 82.9 | 76.5 |
| UAM | 7380 (1659) | 0.026 4979 (7) | 0.026 4980 (0.93 5767) | 35.7 | 35,6251 (78.54) | 4 | 15.24 (6) | 8.89 (3.5) | 0.26 315 789 47 | 14.74 35628 4 | 80 | 75.5 |
| UAM | 7380 (1659) | 0.030 2832 (8) | 0.030 2834 (1.06 9448) | 40.8 | 40.7145 (89.76) | 5 | 10.16 (4) | 7.62 (3) | 0.10 526 315 79 | 6.009 00595 7 | 77 | 74.9 |

## Claims

1. A method of surface equalization of a part formed by 3D printing, comprising:
providing a part-containing tank (16) having a first flat side and a second flat side, wherein the first flat side is opposite the second flat side; and an oblong portion, wherein the oblong portion has a first oblong side and a second oblong side; wherein a motor mount (30) is attached to an outer surface of a base in a location offset from a center of the base of the part-containing tank (16), wherein at least one eccentric motor (14) is attached to the motor mount (30), and wherein a plurality of springs (20) is attached to the part-containing tank (16);
filling the part-containing (16) tank with a media (44);
generating a motion on the part-containing tank in a z-direction; wherein the flow of media (44) in the part-containing tank (16) is directed away from an inner surface of the part-containing tank (16) by structural features (39) on the inner surface of the part-containing tank (16);
activating the motor (14) to rotate the media (44) in the part-containing tank (16);
placing a part in the part-containing tank (16);
suspending the part in the media (44) within the media (44);
equalizing the surface of the part;
**characterized in that**
the part-containing tank (16) has a first diverter (36) proximate an exhaust surface edge of the media (44) and has a second diverter (37) proximate an intake surface edge of the media (44); and
the first diverter (36) is located vertically above the second diverter (37) or a plurality of semi cylindrical guide ribs (39) is located running across an upper portion of the first oblong side to the upper portion of the second oblong side, wherein the plurality of guide ribs (39) are spaced at intervals longitudinally across the oblong portion of the part-containing tank (16).

2. The method of claim 1, further comprising measuring the amplitude of the tank (16), further comprising tuning the amplitude of the tank (16), wherein tuning comprises adjusting a frequency.

3. The method of claim 1, further comprising one of the following features:
- generating a low amplitude and high frequency ratio for motion of the part within the part-containing tank (16);
- setting the angle of the eccentric motor (14) to 30° relative to a vertical axis;
- positioning the eccentric motor (14) tangential to the part-containing tank (16).

4. The method of claim 1, further comprising acoustically damping sound generated during operation of a surface finishing apparatus.

5. The method of claim 4, wherein the ranges of frequencies of sound which are dampened are generally below 73 dBA.

6. The method of claim 1, further comprising applying media (44) over time to slow an attrition rate.

7. The method of claim 1, wherein the part-containing tank (16), the motor (14) and the media (44) are positioned metacentrically with respect to a plurality of the springs (20).

8. A surface equalization apparatus (100), comprising:
a part-containing tank (16) having a first flat side and a second flat side,
wherein the first flat side is opposite the second flat side; and an oblong portion, wherein the oblong portion has a first oblong side and a second oblong side;
a media (44) within the part-containing tank (16);
a motor mount (3) attached to an outer surface of a base in a location offset from a center of the base of the part-containing tank (16);
at least one eccentric motor (14) attached to the motor mount (30), and
a plurality of springs (22) attached to the part-containing tank (16),
**characterized by**
the part-containing tank (16) having a first diverter (36) proximate an exhaust surface edge of the media (44) and a second diverter (37) proximate an intake surface edge of the media (44); and by
the first diverter (36) located vertically above the second diverter (37) or a plurality of semi cylindrical guide ribs (39) running across an upper portion of the first oblong side to the upper portion of the second oblong side, wherein the plurality of guide ribs (39) are spaced at intervals longitudinally across the oblong portion of the part-containing tank (16).

9. The surface equalization apparatus (100) of claim 8, further comprising one of following features:
- acoustic foam surrounding the part-containing tank (16) and the motor (14);
- the media (44) has a density of between 320.37 kg/m³ (20 lbs/ft³) to 1441.66 kg/m³ (90 lbs/ft³);
- the media (44) is a fluidized bed.

## Patentansprüche

1. Verfahren zur Glättung der Oberfläche eines durch 3D-Druck gebildeten Teils, wobei das Verfahren Folgendes umfasst:
Bereitstellen eines Tanks (16) zur Aufnahme eines Teils, wobei der Tank eine erste flache Seite und eine zweite flache Seite aufweist, wobei die erste flache Seite der zweiten flachen Seite gegenüberliegt; und einem länglichen Abschnitt, wobei der längliche Abschnitt eine erste längliche Seite und eine zweite längliche Seite aufweist; wobei eine Motorhalterung (30) an einer äußeren Oberfläche einer Basis an einer Stelle befestigt ist, welche von einem Mittelpunkt der Basis des Tanks (16) zur Aufnahme eines Teils versetzt ist, wobei mindestens ein Exzentermotor (14) an der Motorhalterung (30) befestigt ist und wobei eine Mehrzahl Federn (20) an dem Tank (16) zur Aufnahme eines Teils befestigt ist;
Füllen des Tanks (16) zur Aufnahme eines Teils mit einem Medium (44);
Erzeugen einer Bewegung an dem Tank zur Aufnahme eines Teils in einer Z-Richtung, wobei der Fluss von Medium (44) in dem Tank (16) zur Aufnahme eines Teils von einer inneren Oberfläche des Tanks (16) zur Aufnahme eines Teils durch Strukturmerkmale (39) an der inneren Oberfläche des Tanks (16) zur Aufnahme eines Teils weg geleitet wird;
Betätigen des Motors (14), um das Medium (44) in dem Tank (16) zur Aufnahme eines Teils in Rotation zu versetzen;
Platzieren eines Teils in den Tank (16) zur Aufnahme eines Teils;
Halten des Teils im Medium (44) innerhalb des Mediums (44);
Glätten der Oberfläche des Teils;
**dadurch gekennzeichnet, dass**
der Tank (16) zur Aufnahme eines Teils einen ersten Ablenker (36) nahe einer Kante einer Oberfläche des Auslasses des Mediums (44) aufweist und einen zweiten Ablenker (37) nahe einer Kante einer Oberfläche des Einlasses des Mediums (44) aufweist; und
dass der erste Ablenker (36) vertikal über dem zweiten Ablenker (37) angeordnet ist oder eine Mehrzahl halbzylindrischer Führungsrippen (39) über einen oberen Abschnitt der ersten länglichen Seite zu dem oberen Abschnitt der zweiten länglichen Seite verlaufend angeordnet ist, wobei die Mehrzahl Führungsrippen (39) in Abständen längs über den länglichen Abschnitt des Tanks (16) zur Aufnahme eines Teils aufeinanderfolgend verlaufen.

2. Verfahren nach Anspruch 1, welches ferner ein Messen der Amplitude des Tanks (16) umfasst, welches ferner ein Einstellen der Amplitude des Tanks (16) umfasst, wobei das Einstellen die Einstellung einer Frequenz umfasst.

3. Verfahren nach Anspruch 1, welches ferner eines der folgenden Merkmale umfasst:
- Erzeugen eines niedrige Amplitude/hohe Frequenz-Verhältnisses für eine Bewegung des Teils innerhalb des Tanks (16) für die Aufnahme eines Teils;
- Einstellen des Winkels des Exzentermotors (14) auf 30° relativ zu einer vertikalen Achse;
- Positionieren des Exzentermotors (14) tangential zum Tank (16) zur Aufnahme eines Teils.

4. Verfahren nach Anspruch 1, welches ferner akustisches Dämpfen des während des Betriebs einer Vorrichtung zur Oberflächenglättung erzeugten Geräuschs umfasst.

5. Verfahren nach Anspruch 4, wobei die Frequenzbereiche des Geräuschs, welche gedämpft werden, im Allgemeinen unter 73 dBA liegen.

6. Verfahren nach Anspruch 1, welches ferner eine Zufuhr von Medium (44) im Zeitablauf zur Verlangsamung der Verschleißrate umfasst.

7. Verfahren nach Anspruch 1, wobei der Tank (16) zur Aufnahme eines Teils, der Motor (14) und das Medium (44) metazentrisch in Bezug zu einer Mehrzahl der Federn (20) positioniert sind.

8. Vorrichtung zur Oberflächenglättung (100), umfassend:
einen Tank (16) zur Aufnahme eines Teils, wobei der Tank eine erste flache Seite und eine zweite flache Seite aufweist, wobei die erste flache Seite der zweiten flachen Seite gegenüberliegt;
und einem länglichen Abschnitt, wobei der längliche Abschnitt eine erste längliche Seite und eine zweite längliche Seite aufweist;
ein Medium (44) innerhalb des Tanks (16) zur Aufnahme eines Teils;
eine Motorhalterung (3), die an einer äußeren Oberfläche einer Basis an einer Stelle befestigt ist, welche von einem Mittelpunkt der Basis des Tanks (16) zur Aufnahme eines Teils versetzt ist;
mindestens einen Exzentermotor (14), welcher an der Motorhalterung (30) befestigt ist und
eine Mehrzahl Federn (22), welche an dem Tank (16) zur Aufnahme eines Teils befestigt ist,
**dadurch gekennzeichnet, dass**
der Tank (16) zur Aufnahme eines Teils einen ersten Ablenker (36) nahe einer Kante einer Oberfläche des Auslasses des Mediums (44) aufweist und einen zweiten Ablenker (37) nahe einer Kante einer Oberfläche des Einlasses des Mediums (44) aufweist; und dadurch, dass
der erste Ablenker (36) vertikal über dem zweiten Ablenker (37) angeordnet ist oder eine Mehrzahl halbzylindrischer Führungsrippen (39) über einen oberen Abschnitt der ersten länglichen Seite zu dem oberen Abschnitt der zweiten länglichen Seite verlaufend angeordnet ist, wobei die Mehrzahl Führungsrippen (39) in Abständen längs über den länglichen Abschnitt des Tanks (16) zur Aufnahme eines Teils aufeinanderfolgend verlaufen.

9. Vorrichtung zur Oberflächenglättung (100) nach Anspruch 8, welche ferner eines der folgenden Merkmale umfasst:
- Akustikschaumstoff, welcher den Tank (16) zur Aufnahme eines Teils und den Motor (14) umgibt;
- die Dichte des Mediums (44) beträgt zwischen 320,37 kg/m³ (20 Pfund/Kubikfuß) und 1.441,66 kg/m³ (90 Pfund/Kubikfuß);
- das Medium (44) ist eine Wirbelschicht.

## Revendications

1. Procédé d'égalisation de surface d'une pièce formée par impression 3D, comprenant :
fourniture d'un réservoir (16) destiné à contenir une pièce, le réservoir ayant un premier côté plat et un deuxième côté plat, le premier côté plat étant opposé au deuxième côté plat ; et une partie oblongue, la partie oblongue ayant un premier côté oblong et un deuxième côté oblong ; un support de moteur (30) étant fixé à une surface extérieure d'une base dans un emplacement décalé par rapport à un centre de la base du réservoir (16) destiné à contenir une pièce, au moins un moteur excentrique (14) étant fixé au support de moteur (30), et une pluralité de ressorts (20) étant fixée au réservoir (16) destiné à contenir une pièce ;
remplissage du réservoir (16) destiné à contenir une pièce avec une matière (44) ;
génération d'un mouvement sur le réservoir destiné à contenir une pièce dans une direction z ; le flux de matière (44) dans le réservoir (16) destiné à contenir une pièce étant dirigé loin d'une surface intérieure du réservoir (16) destiné à contenir une pièce par des caractéristiques structurelles (39) sur la surface intérieure du réservoir (16) destiné à contenir une pièce ;
activation du moteur (14) pour faire tourner la matière (44) dans le réservoir (16) destiné à contenir une pièce ;
placement d'une pièce dans le réservoir (16) destiné à contenir une pièce ;
suspension de la pièce dans la matière (44) à l'intérieur de la matière (44) ;
égalisation de la surface de la pièce ;
**caractérisé en ce que**
le réservoir (16) destiné à contenir une pièce a un premier déviateur (36) à proximité d'un bord de surface d'évacuation de la matière (44) et a un deuxième déviateur (37) à proximité d'un bord de surface d'admission de la matière (44) ; et
le premier déviateur (36) est situé verticalement au-dessus du deuxième déviateur (37) ou une pluralité de nervures de guidage semi-cylindriques (39) s'étend d'une partie supérieure du premier côté oblong à la partie supérieure du deuxième côté oblong, la pluralité de nervures de guidage (39) étant espacées à des intervalles longitudinalement à travers la partie oblongue du réservoir (16) destiné à contenir une pièce.

2. Procédé selon la revendication 1, comprenant en outre une mesure de l'amplitude du réservoir (16), comprenant en outre un réglage de l'amplitude du réservoir (16), le réglage comprenant un ajustement d'une fréquence.

3. Procédé selon la revendication 1, comprenant en outre l'une des caractéristiques suivantes :
- génération d'un rapport de faible amplitude et de haute fréquence pour un mouvement de la pièce à l'intérieur du réservoir (16) destiné à contenir une pièce ;
- réglage de l'angle du moteur excentrique (14) à 30° par rapport à un axe vertical ;
- positionnement du moteur excentrique (14) de manière tangentielle au réservoir (16) destiné à contenir une pièce.

4. Procédé selon la revendication 1, comprenant en outre un amortissement acoustique du son généré pendant un fonctionnement d'un appareil de finition de surface.

5. Procédé selon la revendication 4, dans lequel les plages de fréquences du son qui sont amorties sont généralement inférieures à 73 dBA.

6. Procédé selon la revendication 1, comprenant en outre une application de la matière (44) au fil du temps pour ralentir un taux d'attrition.

7. Procédé selon la revendication 1, dans lequel le réservoir (16) destiné à contenir une pièce, le moteur (14) et la matière (44) sont positionnés de manière métacentrique par rapport à une pluralité de ressorts (20).

8. Appareil d'égalisation de surface (100), comprenant :
un réservoir (16) destiné à contenir une pièce, le réservoir ayant un premier côté plat et un deuxième côté plat, le premier côté plat étant opposé au deuxième côté plat ; et une partie oblongue, la partie oblongue ayant un premier côté oblong et un deuxième côté oblong,
une matière (44) à l'intérieur du réservoir (16) destiné à contenir une pièce ;
un support de moteur (3) fixé à une surface extérieure d'une base dans un emplacement décalé par rapport à un centre de la base du réservoir (16) destiné à contenir une pièce ;
au moins un moteur excentrique (14) fixé au support de moteur (30), et
une pluralité de ressorts (22) fixés au réservoir (16) destiné à contenir une pièce,
**caractérisé par**
le réservoir (16) destiné à contenir une pièce ayant un premier déviateur (36) à proximité d'un bord de surface d'évacuation de la matière (44) et un deuxième déviateur (37) à proximité d'un bord de surface d'admission de la matière (44) ; et par
le premier déviateur (36) situé verticalement au-dessus du second déviateur (37) ou une pluralité de nervures de guidage semi-cylindriques (39) s'étendant d'une partie supérieure du premier côté oblong à la partie supérieure du deuxième côté oblong, la pluralité de nervures de guidage (39) étant espacées à des intervalles longitudinalement à travers la partie oblongue du réservoir (16) destiné à contenir une pièce.

9. Appareil d'égalisation de surface (100) selon la revendication 8, comprenant en outre l'une des caractéristiques suivantes :
- une mousse acoustique entourant le réservoir (16) destiné à contenir une pièce et le moteur (14) ;
- la matière (44) a une densité comprise entre 320,37 kg/m³ (20 lbs/ft³) et 1441,66 kg/m³ (90 lbs/ft³) ;
- la matière (44) est un lit fluidisé.
